# EUROPEAN PATENT APPLICATION

(11) **EP 2 600 159 A1**
(43) Date of publication of application: **05.06.2013**
(21) Application number: 10855329.8
(22) Date of filing: 30.07.2010
(51) Int. Cl.: G01P 5/00

(54) **WIND DETECTION DEVICE**

(71) Applicant: Pioneer Corporation, Kawasaki-shi, Kanagawa 212-0031 (JP)
(72) Inventor: KODAMA Yasuteru, Kawasaki-shi, Kanagawa 212-0031 (JP); FUJITA Ryujiro, Kawasaki-shi, Kanagawa 212-0031 (JP); SHIODA Takehiko, Kawasaki-shi, Kanagawa 212-0031 (JP)
(74) Representative: Haley, Stephen
(86) International application number: PCT/JP2010/062921
(87) International publication number: WO 2012/014320

(57) **Abstract**

A wind detection apparatus (1) is provided that is not expensive and can improve the directivity in the traveling direction. The wind detection apparatus includes: a main body (10) having a flow passage (11) that allow air to flow through and a shielding part (13) that shields part of the flow passage (11) in the circumferential direction with respect to the major axis direction of the flow passage (11); and a sound measuring device 12 that is arranged to be partially connected to the flow passage (11).

## Description

### Technical field

The present invention relates to a wind detection apparatus having directivity.

### Background art

In recent years, a lot of people do outdoor sports such as walking, running and cycling for enjoyment, due to the increased health awareness. These people who do outdoor sports include one using an apparatus that measures a moving velocity, a travel distance or calories-out. That is, there are a person who checks the travel distance and the calories-out in real time for data on the intermediate record, a person who checks the moving velocity in real time as data on the contents of the exercise, or a person who checks the travel distance or the calories-out as data on the result of the exercise. In this way, these people enjoy outdoor sports by measuring and recording the numerical values with their own indices, using predetermined apparatuses.

By the way, outdoor sports such as walking are done in nature, and therefore are greatly affected by wind. For example, in a case in which a cyclist is running on a bicycle, when the head wind is picking up (the velocity of the head wind increases), the air resistance increases, and therefore the running velocity decreases if the running condition of the cyclist (the power of the running of the cyclist) is constant. Therefore, in a case in which the running condition (for example, the number of rotations of a pedal) of the cyclist is used as the index of running, the running velocity decreases when the cyclist is running against the wind. In this case, even if a decrease in the running velocity is caused by the wind, the cyclist is misled into thinking that the running velocity is decreased by an increase in the degree of fatigue, and therefore is not being able to continue to run comfortably. Here, when a bicycle is running at a speed over 30 km/h, air resistance accounts for most of the resistance against the running.

In addition, in a case in which running velocity is used as an index of running, when the air resistance is changed by a change in the wind, the cyclist adjusts the number of rotations of the pedals and so forth to keep the running velocity constant. Therefore, if a cyclist runs the same course as usual, the power done by the cyclist varies depending on the strength of the wind. In a case of strong head wind, the cyclist sometimes needs to do work beyond the capability to keep the running velocity constant. In this case, the cyclist not only suffers from physical exhaustion, but also cannot keep the running velocity constant, and therefore feels uncomfortable or a sense of humiliation.

In this way, the air resistance due to wind affects the cyclist both mentally and physically, and therefore is regarded as an important index for running. In addition, the relative distance between a moving person and the atmospheric air (hereinafter "travel distance relative to the air"), which is related to air resistance, is regarded as an index for outdoor sports. This "travel distance relative to the air" can be calculated by the multiplication of "the velocity of a moving person (who is doing exercise) relative to the air (atmospheric air)."

In order to calculate the travel distance relative to the air, it is necessary to measure the velocity of a moving person relative to the air. Here, although it is difficult to directly measure the velocity of a moving person relative to the air, it can be easily measured by using a wind detecting apparatus (see, for example, Patent Literatures 1 to 3). As for the relationship between the velocity of a moving person relative to the air and the velocity of the air relative to a moving person, the directions are opposite to one another, but the magnitudes (velocities) are the same as one another. Therefore, it is possible to calculate "travel distance relative to the air" by measuring the velocity of the air relative to the moving person, by using a wind detection apparatus.

A wind detection apparatus disclosed in Patent literature 1 (hereinafter "related art 1") includes a wind direction sensor and a cylindrical air conduit pipe in which a sensing part constituting the wind direction sensor is disposed. Here, the wind direction sensor is capable of measuring wind velocity and wind power. With prior art 1, the axial component of the wind velocity in the air conduit pipe is measured by flowing air into the air conduit pipe.

A wind detection apparatus disclosed in Patent literature 2 (hereinafter "related art 2") includes; first and second vortex generators that generate Karman vortexes; microphones attached to the first and second vortex generators, respectively; and pressure conduits that transmit pressure fluctuations in the Karman vortexes to the microphones, which are attached to the first and second vortex generators. With related art 2, a wind velocity is measured by hitting wind against the vortex generators to generate Karman vortexes.

A wind detection apparatus disclosed in Patent literature 3 (hereinafter "related art 3") includes: an airflow/sound converting part for converting an airflow blown out of an opening part into sound; and a microphone for converting the sound acquired by the airflow/sound converting part into an electric signal. With related art 3, a wind velocity is measured by placing airflow (wind) in contact with the airflow/sound converting part.

### Citation list

### Patent Literature

PTL1: Japanese Patent Application Laid-Open No. 2000-162229
PTL1: Japanese Patent Application Laid-Open No. 2004-317191
PTL1: Japanese Patent Application Laid-Open No. HEI6-194374

### Summary of Invention

### Technical Problem

With related art 1, bidirectionality are basically provided, and therefore it is possible to measure the wind velocity relative to a specific direction such as a traveling direction, but however, the price is increased because of having a wind sensor. In contrast, related art 2 and related art 3 having the microphones are cheaper than related art 1. However, related 2 neither disclose nor consider about directivity. Meanwhile, with related art 3, it is possible to detect wind directions, but difficult to reduce the production cost because the structure is complicated using two microphones.

### Solution to Problem

To solve the above-described problem, the wind detection apparatus according to the present invention includes: a wind introducing part including: a flow passage configured to allow air to flow through; and a shielding part configured to shield part of the flow passage in the circumferential direction with respect to a length direction of the flow passage, and; a sound measuring device configured to measure sound, the sound measuring device being spatially connected to the flow passage.

### Brief Description of Drawings

Fig. 1 (a) is a side view showing a bicycle equipped with mobile object measurement equipment having a wind detection apparatus;
Fig. 1(b) is an enlarged view showing the part of the bicycle to which the mobile object measurement equipment shown in Fig. 1(a) is attached;
Fig. 2(a) is a bottom view showing the mobile object measurement equipment according to Embodiment 1;
Fig. 2(b) is a cross-sectional view of Fig. 2(a) taken along line A-A;
Fig. 2(c) is a longitudinal sectional view showing the mobile object measurement equipment shown in Fig. 2(a);
Fig. 3(a) is a bottom view showing the mobile object measurement equipment according to Embodiment 2;
Fig. 3(b) is a cross-sectional view of Fig. 3(a) taken along line B-B;
Fig. 3(c) is a longitudinal sectional view showing the mobile object measurement equipment shown in Fig. 3(a);
Fig. 4(a) is a bottom view showing the mobile object measurement equipment according to Embodiment 2;
Fig. 4(b) is a cross-sectional view of Fig. 4(a) taken along line C-C;
Fig. 4(c) is a longitudinal sectional view showing the mobile object measurement equipment shown in Fig. 4(a);
Fig. 5(a) is a bottom view showing the mobile object measurement equipment according to Embodiment 3;
Fig. 5(b) is a cross-sectional view of Fig. 5(a) taken along line D-D;
Fig. 5(c) is a longitudinal sectional view showing the mobile object measurement equipment shown in Fig. 5(a);
Fig. 6 (a) is a bottom view showing the mobile object measurement equipment according to Embodiment 4;
Fig. 6(b) is a cross-sectional view of Fig. 6(a) taken along line E-E;
Fig. 6(c) is a longitudinal sectional view showing the mobile object measurement equipment shown in Fig. 6(a);
Fig. 7(a) is a bottom view showing the mobile object measurement equipment according to Embodiment 4;
Fig. 7(b) is a cross-sectional view of Fig. 6(a) taken along line F-F;
Fig. 7(c) is a longitudinal sectional view showing the mobile object measurement equipment shown in Fig. 7(a); and
Fig. 8 is a graph showing the directivity of the wind detection apparatus.

### Description of Embodiments

### (Embodiment 1)

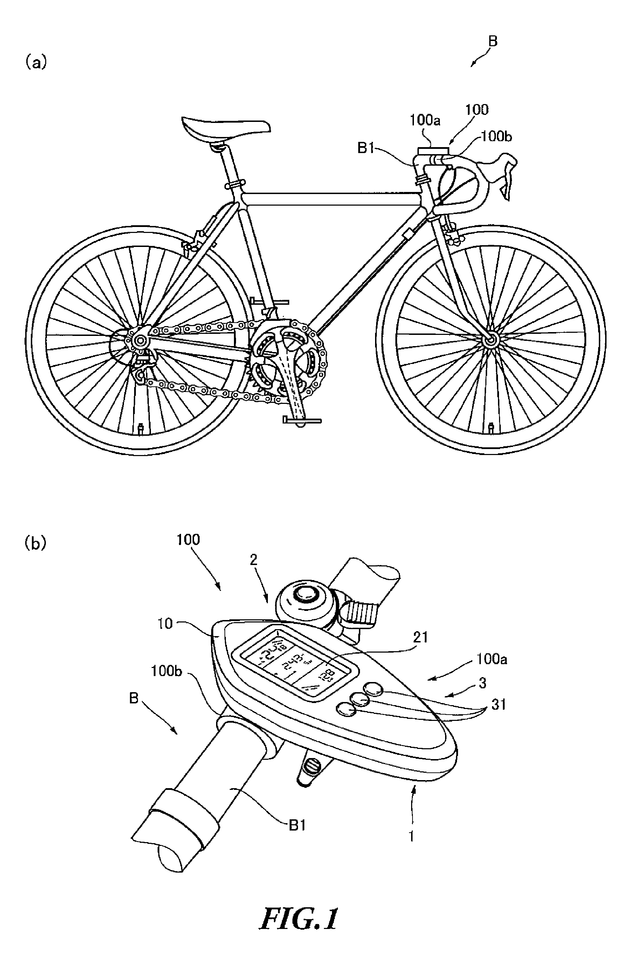

Now, an embodiment of the present invention will be described in detail with reference to the drawings. Fig. 1 is an external view showing a bicycle B equipped with mobile object measurement equipment 100 incorporating a wind detection apparatus 1. The mobile object measurement equipment 100 includes a main body part 100a and an attachment part 100b. The main body part 100a has a main body 10 into which a wind detection apparatus 1 that takes airflow such as wind, generates sound such as wind noise from the taken airflow and measures the magnitude of the sound (the amplitude of vibrations that causes the sound); a display device 2 that displays a preset items; and an input device 3 are integrally incorporated. The attachment part 100b is used to fix the main body part 100a to the bicycle. The mobile object measurement equipment 100 measures the wind velocity based on the magnitude of the sound measured by the wind detection apparatus 1, calculates the values of preset various items such as calories-out, travel distance in the atmosphere and power by using the wind velocity, and displays them on the display device 2.

As shown in Fig. 1, the attachment part 100b has a mechanism to fix the attachment part 100b to a handle B1 of the bicycle B while the user grips the handle B1. The attachment part 100b is connected to the main body 100a. When the mobile object measurement equipment 100 is appropriately attached to the bicycle B, the attachment part 100b is placed on top of the handle B1, and the main body 100a is placed on top of the attachment part 100b.

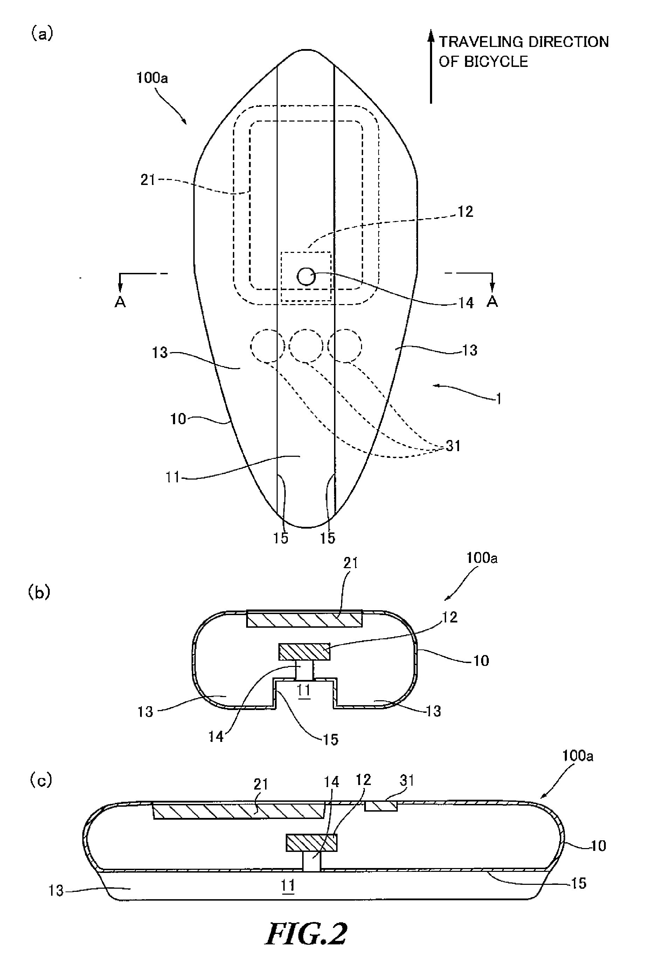

As shown in Fig. 2 (a) to Fig. 2(c), the main body 10 is formed into an approximate flat plate. The attachment part 100b is provided on the lower surface of the main body 10, and the display part 21 of the display device 2 and an operation part 31 of an input device 3 are provided on the upper surface of the main body 10. The display device 2 displays predetermined information. The cyclist can perform input operation through the operation part 31. Therefore, when the mobile object measurement equipment 100 is attached to the bicycle B, the lower surface faces the ground and the upper surface faces the atmosphere (cyclist). Therefore, the cyclist can easily see and check the display part 21 of the display device 2 and the operation part 31 of the input device 3. Here, the display device has a substrate (not shown) to display predetermined information on the display part 21, which is accommodated in the main body 10. On the other hand, also the input device 3 has a substrate (not shown) to recognize the input information operated by the operation part 31, which is accommodated in the main body 10.

Here, with the present embodiment, each of the surfaces of the main body 10 is shaped like an approximate ellipse, or an approximate diamond having the diagonal lines of the different lengths. When the mobile object measurement equipment 100 is appropriately attached to the bicycle B, the major axis direction of those surfaces is the same as the moving direction (forward and backward directions) of the bicycle B. Then, the display part 21 and the operation part 31 are arranged on the upper surface of the main body 100a side by side in the major axis direction. When the mobile object measurement equipment 100 is appropriately attached to the bicycle B, the display part 21 is placed before the operation part 31 with respect to the bicycle B.

The wind detection apparatus 1 is provided in the main body 10. The wind detection apparatus 1 includes: a flow passage 11 that allows airflow such as wind to flow through; a sound measuring device 12 that measures sound (vibrations); a shielding part 13 that shields the flow passage 11 from the airflow moving in the minor axis direction of the lower surface of the main body 10 (i.e. in the direction orthogonal to the traveling direction of the bicycle) and a detection port 14 that generates sound (vibrations) from airflow such as wind in the upstream side of the sound measuring device 12.

A groove 15 having a U-shaped cross section is formed across the lower surface of the main body 10, which is connected to the attachment part 100b of the main body 10 in the major axis direction. That is, the groove 15 opens in the length direction and one direction orthogonal to the length direction. In this way, the groove 15 is formed on the lower surface that is connected to the attachment part 100b and faces the ground, that is, the flow passage 11 opens to face the ground, and therefore it is possible to prevent rain water, dust and so forth from entering the flow passage 11. As described later, with the sound measuring device 12 provided in the flow passage 11, it is possible to prevent the product from wearing out early. Here, the groove 15 constitutes the flow passage 11, and both side parts of the groove 15 formed in the main body 10 constitute the shielding part 13.

The sound measuring device 12 and the detection port 14 are provided in the center of the groove 15. The sound measuring device 12 is provided between the flow passage 11 and the upper surface of the main body 10 on which the display part 21 and the operation part 31 are provided. The structure and the size of the sound measuring device 12 are not limited as long as they allow the sound measuring device 12 to detect sound (vibrations) and measure the magnitude of the sound. With the present embodiment, a MEMS microphone packaged as a flat plate is used as the sound measuring device 12. In addition, the detection port 14 is formed from the wall surface of the groove 15 constituting the flow passage 11 to the part of the sound measuring device 12 to collect sound (not shown, and hereinafter referred to as "sound port"), and therefore allows communication between the flow passage 11 and the sound port of the sound measuring device 12.

When the airflow moving in the direction opposite to the traveling direction of the bicycle B flows into the flow passage 11 and passes through the detection port 14, turbulent flow is generated. When this turbulent flow moves through the detection hole 14 to the sound measuring device 12, the sound measuring device 12 detects the turbulent flow as sound (so-called "wind noise") and measures the magnitude of the sound. Then, the sound measuring device 12 is equipped with electronic components such as a CPU and a ROM and transmits measured values to the substrate (not shown) electrically connected to the sound measuring device 12. This substrate calculates the wind velocity based on the measured values, by using, for example, tables and graphs in which the magnitudes of the sound are associated with the wind velocities, and the computation expressions. Here, although the shape of the detection port 14 is not limited, it is preferred that the detection port 14 has a column shape because it is possible to prevent the attenuation of sound (vibrations) due to turning loss.

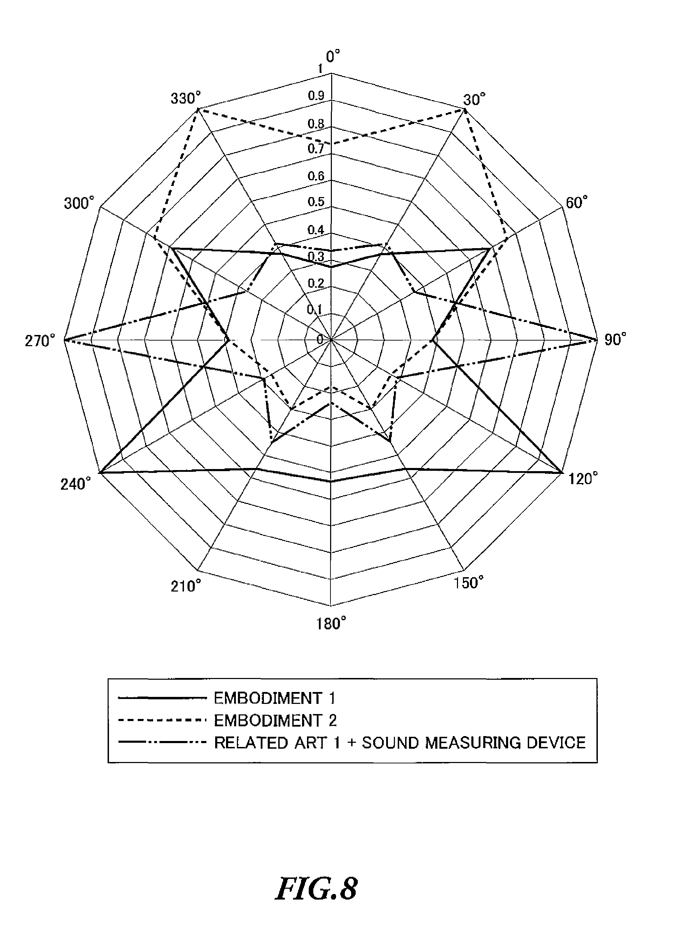

On the other hand, the airflow moving in the direction orthogonal to the moving direction of the bicycle B is shielded from the flow passage 11 by the shielding part 13. That is, the shielding part 13 prohibits airflow from directly entering the flow passage 11. In this way, the shielding part 13 that prohibits airflow from directly entering the flow passage 11 is provided in the moving direction of the bicycle B. This improves the directivity of the wind detection apparatus 1 in the moving direction of the bicycle B. Here, although the airflow moving in the direction orthogonal to the traveling direction of the bicycle B may cause turbulent flow in both ends of the flow passage 11, the flow passage 11 partly opens in its circumferential direction (one direction orthogonal to the length direction of the groove 15), and therefore the turbulent flow randomly moving is discharged from the opening part to the outside of the flow passage 11. As a result, it is possible to improve the directivity of the wind detection apparatus 1 in the moving direction of the bicycle B (see Fig. 8).

Here, the graph shown in Fig. 8 represents the directivity of the wind detection apparatus 1 according to Embodiment 1; the directivity of a wind detection apparatus 101 according to Embodiment 2 described later; and the directivity of a variation of the wind detection apparatus 1 disclosed in related art 1, which has the sound measuring device 12 instead of the wind direction sensor (hereinafter "altered related air 1"). In Fig. 8, the distance from the origin represents the level of the directivity in each direction of the wind detection apparatus 1, that is, the sensitivity to each direction. Here, the direction of the directivity corresponds to the angle around the origin. To be more specific, 0 degree represents the front side of the wind detection apparatus 1; 180 degrees represent the back side of the wind detection apparatus 1; and 90 degrees and 270 degrees represent both sides of the wind detection apparatus 1.

As shown in Fig. 8, the directivity of the altered related art 1 is stronger for 90 degrees and 270 degrees than for 0 degree and 180 degrees. Now, this reason will be explained. Basically, turbulent flow is generated due to the wind coming to the wind detection apparatus 1, from the front and the back sides of the wind detection apparatus 1. Meanwhile, when the wind comes to the wind detection apparatus 1 from the sides of the wind detection apparatus 1, larger turbulent flow (wind noise) is generated near the entrance of the flow passage 11. Therefore, the directivity of the altered related art 1 is stronger for the sides (90 degrees and 270 degrees) than the front and the back (0 degree and 180 degrees) of the wind detection apparatus 1.

Then, for 90 degrees and 270 degrees, the directivity of the wind detection apparatus 1 is weaker than that of the altered related art 1. The reason is that if turbulent flows are generated in both ends of the flow passage 11, they flow out of the flow passage 11 due to the irregular nature of the turbulent flows, before the turbulent flows reach the detection port 14. Here, the graph shown in Fig. 8 represents the result of the measurement of the magnitude of sound by the wind detection apparatus, when wind with a predetermined wind velocity is provided while the wind detection apparatus is rotated every 30 degrees, from 0 degree set at the front side of the wind detection apparatus.

### (Embodiment 2)

Next, Embodiment 2 of the present invention will be described. The descriptions of the same reference numerals and names as in Embodiment 1 will be omitted. Mobile object measurement equipment 200 includes a main body part 200a and the attachment part 100b. The main body part 200a has a main body 110 into which a wind detection apparatus 101 that takes airflow such as wind, generates sound such as wind noise from the taken airflow and measures the magnitude of the sound (the amplitude of vibrations that causes the sound); the display device 2 that displays a preset items; and the input device 3 are integrally incorporated. The attachment part 100b is used to fix the main body part 200a to the bicycle.

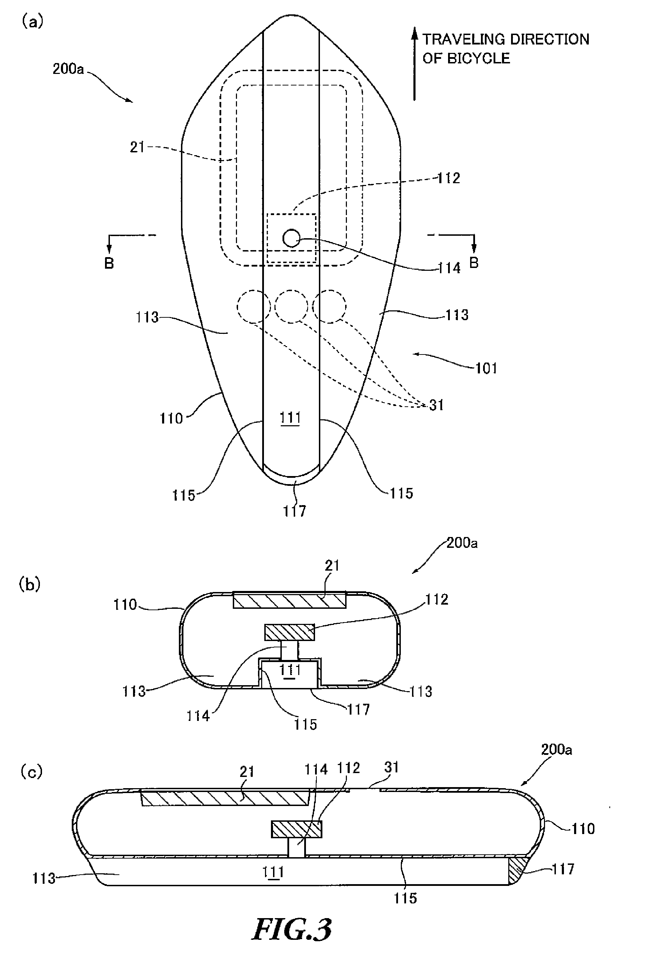

As shown in Fig. 3 (a) to Fig. 3(c), the main body 110 is formed into an approximate flat plate. The attachment part 100b is provided on the lower surface of the main body 110, and the display part 21 of the display device 2 and the operation part 31 of the input device 3 are provided on the upper surface. The lower surface of the main body 110, which is connected to the attachment part 100b, is shaped like an approximate ellipse, or an approximate diamond having the diagonal lines of the different lengths. A groove 115 having a U-shaped cross section is formed across the lower surface of the main body 110 in the major axis direction. The groove 115 opens in the direction orthogonal to its length direction as the same in Embodiment 1, but opens only at one end in the length direction. That is, the groove 115 is closed by a blocking wall 117 at one end, and therefore has only one entrance to the flow passage 111 in the length direction of the groove 115.

When the mobile object measurement equipment 200 is appropriately attached to the bicycle B, the open part formed at one end of the groove 115 is located in the front side of the bicycle B and the closed part formed by the blocking wall 117 at the other end is located in the back side of the bicycle B. Therefore, basically the airflow coming from the front side of the bicycle B to the bicycle B enters the flow passage 111 from the open part, but the airflow coming from the back side of the bicycle B to the bicycle B cannot enter the flow passage 111. In this way, the mobile object measurement equipment 200 can detect only the sound generated by the airflow moving from the front side of the bicycle B to the bicycle B and measure the magnitude of the sound. This improves the directivity of the wind detection apparatus 101 for the direction (0 degree) opposite to the traveling direction of the bicycle B. Therefore, as shown in Fig. 8, the directivity of the wind detection apparatus 101 in the moving direction of the bicycle B is significantly biased to the front side of the bicycle B overall.

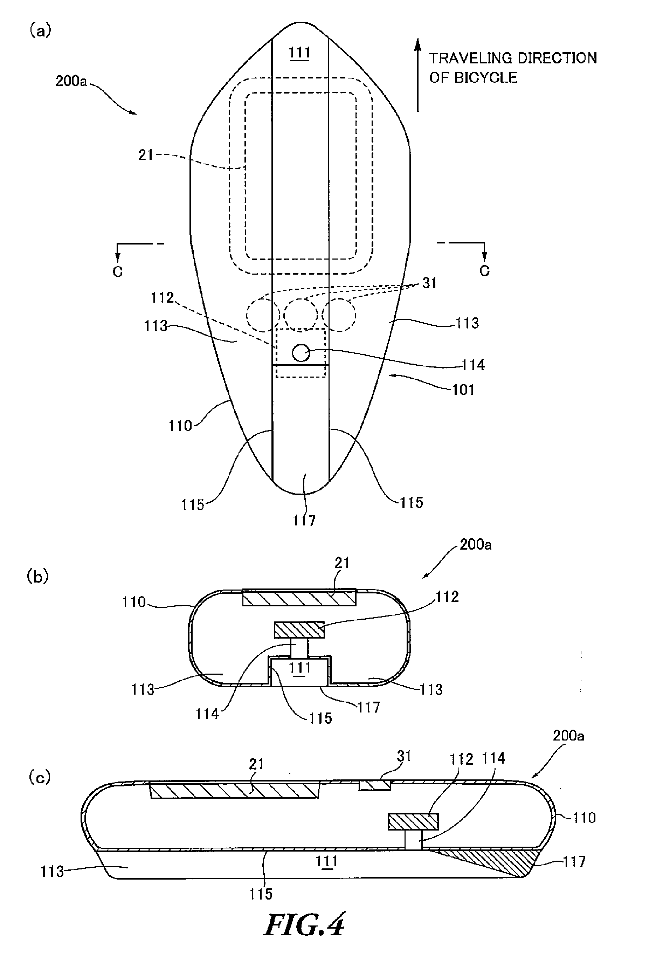

Here, in Fig. 3, the surface of the blocking wall 117, which faces the flow passage 111, is perpendicular to the bottom surface of the groove 115. However, the surface may be tilted in the bottom surface of the groove 115 as shown in Fig. 4(a) to Fig. 4(c). Here, by tilting the blocking wall 117 upwardly from the front side of the bicycle B to the back side, the airflow entering the flow passage 111 from the front side of the bicycle B moves to the back side of the bicycle B along the blocking wall 117 and is discharged to the outside of the flow passage 111. As a result, it is possible to prevent the generation of turbulent flow by reflecting the airflow flowing through the flow passage 111 on the blocking wall 117, and therefore to prevent loss of the accuracy of the measured values by the wind detection apparatus 101.

In addition, in this state in which the airflow is discharged through the blocking wall 117, the detection port 114 is located, for example, near the boundary between the groove 115 and the blocking wall 117. By this means, it is possible to improve the accuracy of the measured values by the sound measuring device 112. This reason is that an increase in the distance between the detection port 114 and the flow passage 111 makes it difficult for the turbulent flow generated at the inlet of the flow passage 111 to reach the detection port 114. Moreover, although in Fig. 3 and Fig. 4, the surface of the blocking wall 117 facing the flow passage 111 is flat, it may be curved.

### (Embodiment 3)

Next, Embodiment 3 of the present invention will be described. The descriptions of the same reference numerals and names as in Embodiment 1 will be omitted. Mobile object measurement equipment 300 includes a main body part 300a and the attachment part 100b. The main body part 300a has a main body 210 into which a wind detection apparatus 201 that takes airflow such as wind, generates sound such as wind noise from the taken airflow and measures the magnitude of the sound (the amplitude of vibrations that causes the sound); the display device 2 that displays a preset items; and the input device 3 are integrally incorporated. The attachment part 100b is used to fix the main body part 300a to the bicycle B. With Embodiment 1 and Embodiment 2, the sound measuring devices 12 and 112, and the detection ports 14 and 114 are provided in the main bodies 10 and 110, respectively. Meanwhile, with the present embodiment, the sound measuring device 212 and 1 the detection port 214 protrude from the wall surface of a groove 215 constituting a flow passage 211.

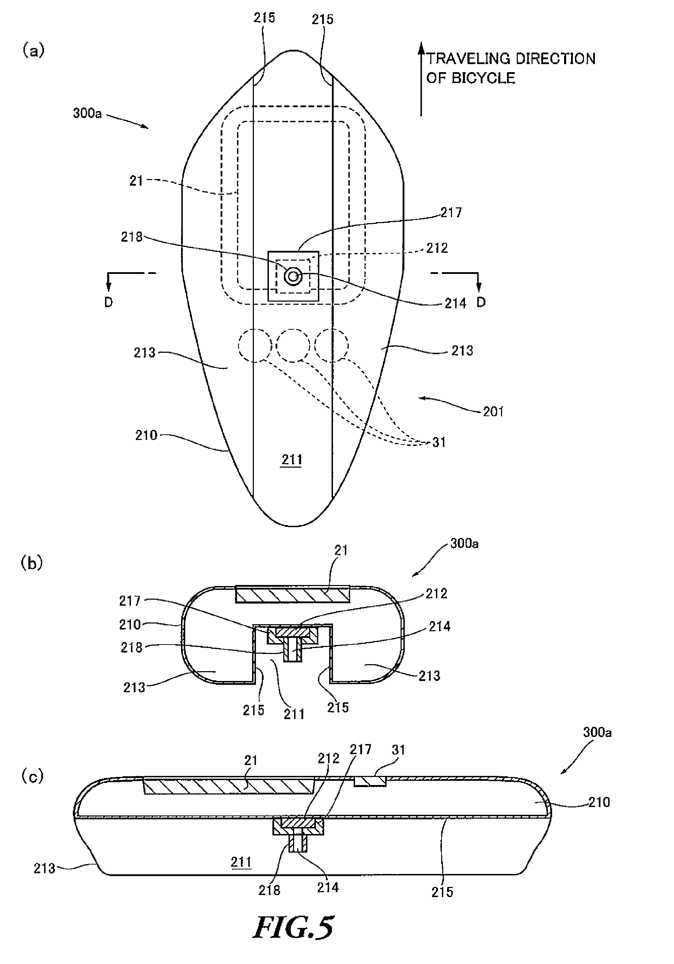

For example, as shown in Fig. 5, a sound measuring device 212 is accommodated in a storage case 217, and a cylindrical detection port form 218 is connected to the storage case 217. The detection port 214 is formed by the hollow portion of the detection port form 218. One end of the detection port 214 faces the flow passage 211 constituted by the groove 215 meanwhile the other end of the detection port 214 communicates with a communication port (not shown) of the storage case 227, which is formed to correspond to the sound port of the sound measuring device 212. In this way, by protruding the sound measuring device 212 and the detection port 214 from the wall surface of the groove 215, it is possible to reduce the thickness of the portion of the main body 210 between the groove 215 and the portion on which the display part 21 and the operation part 31 are provided, and therefore to reduce the size and weight of the wind detection apparatus 201 and of the mobile object measurement equipment 300. Moreover, these sound measuring device 212, storage case 217 and detection port form 218 may be unitized and detachably mounted to the main body 210. Therefore, it is possible to easily replace parts of the apparatus. As a result, it is possible to reduce the running cost of the wind detection apparatus 201 and of the mobile object measurement equipment 300.

### (Embodiment 4)

Next, Embodiment 4 of the present invention will be described. The descriptions of the same reference numerals and names as in Embodiment 1 will be omitted. Mobile object measurement equipment 400 includes a main body part 400a and the attachment part 100b. The main body part 400a has a main body 310 into which a wind detection apparatus 301 that takes airflow such as wind, generates sound such as wind noise from the taken airflow and measures the magnitude of the sound (the amplitude of vibrations that causes the sound); the display device 2 that displays a preset items; and the input device 3 are integrally incorporated. The attachment part 100b is used to fix the main body part 400a to the bicycle B. With Embodiment 1 to Embodiment 3, a set of the sound measuring device and the detection port is provided for one wind detection apparatus. Meanwhile, with the present invention, a plurality of sets of the sound measuring device 312 and the detection port 314 are provided for one wind detection apparatus 301.

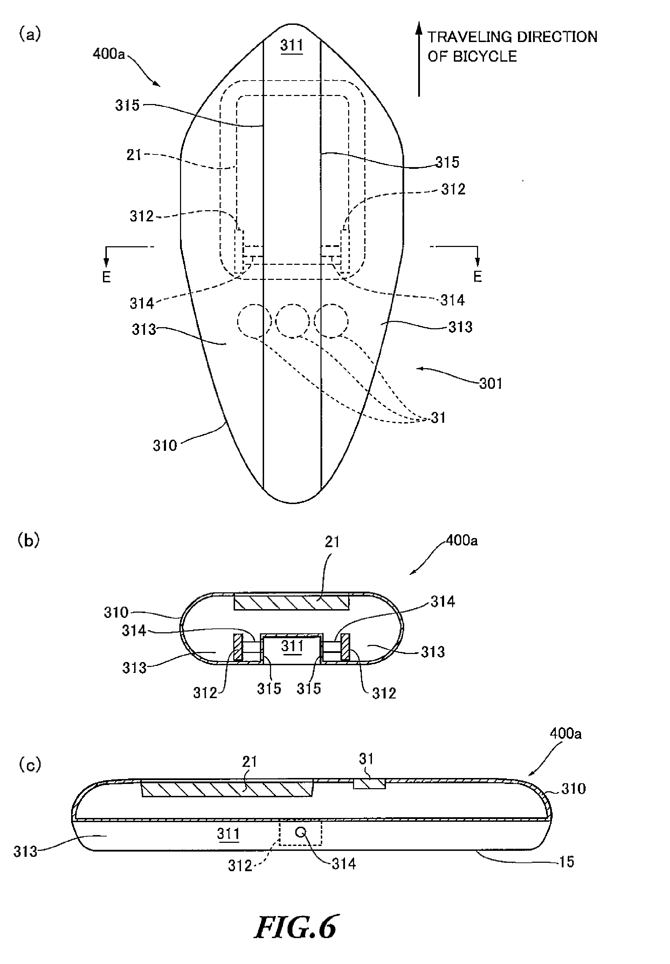

For example, as shown in Fig. 6, two sets of the sound measuring device 312 and the detection port 314 are provided symmetrically with respect to a groove 315 in the length direction. One set of the sound measuring device 312 and the detection port 314 is provided in a shielding part 313A, meanwhile the other set of the sound measuring device 312 and the detection port 314 is provided in a shielding part 313B. In this way, the sets of the sound measuring device 212 and the detection port 214 are provided in the different shielding parts 313, respectively. By this means, it is possible to reduce the thickness of the portion of the main body 310 between the groove 315 and the portion on which the display part 21 and the operation part 31 are provided, and therefore to reduce the size and weight of the wind detection apparatus 301 and of the mobile object measurement equipment 400. Here, the shape and the distance from the bottom surface of the groove 315 are the same between the detection port 314 provided in the shielding part 313A and the detection port 314 provided in the shielding part 313B.

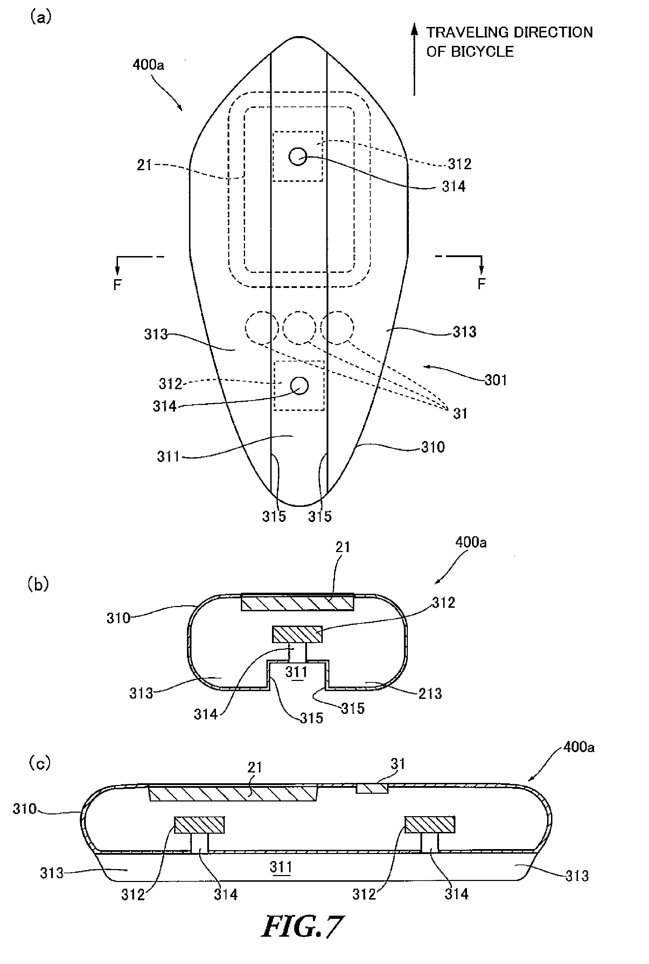

Moreover, for example, as shown in Fig. 7, two sets of the sound measuring device 312 and the detection port 314 are provided in the different positions in the length direction of the groove 315. All of the sound measuring devices 312 and the detection ports 314 are provided between the flow passage 311 and the upper surface of the main body 310 on which the display part 21 and the operation part 31 are provided.

As shown in Fig. 6 and Fig. 7, sound is generated from the airflow at a plurality of points, and the magnitude of the sound is measured. Then, by calculating the average value of the measured values, it is possible to improve the degree of reliability of the measured values that are measured by the wind detection apparatus 401. Here, although as shown in Fig. 6 and Fig. 7, the sound measuring devices 312 and the detection ports 314 are provided at a plurality of points, the positions on which they are mounted are not limited. Moreover, although, in Fig. 6 and Fig. 7, the distance between the detection hole 314 and the bottom surface of the groove 315 is fixed, it may be varied.

### (Another embodiment)

Although, with Embodiment 1 to Embodiment 4, the groove, that is, the flow passage has a U-shaped cross section, the groove may have a semicircular cross section or a trapezoidal cross section. In addition, although, with Embodiment 1 to Embodiment 4, the wind detection apparatus is incorporated into the main body of the mobile object measurement equipment, it may be removably mounted in the main body of the mobile object measurement equipment. Moreover, although, with Embodiment 1 to Embodiment 4, the flow passage is formed by the groove that is formed in the main body, it is by no means limiting. For example, a configuration is possible where a set of walls stands from the flat portion of the main body to make a flow passage equivalent to the grooves 15, 115 and 215, which partly opens in the circumferential direction. Alternately, in order to protect from the influences of the turbulent flow generated by the attachment part 100 b and the noise from the road surface, the groove 15 may be formed on the surface of the main body 10.

### Reference Signs List

1, 101, 201, 301 wind detection apparatus
2 display device
3 operation device
10, 110, 210, 310 main body (wind introducing part)
11, 111, 211, 311 flow passage
12, 112, 212, 312 sound measuring device
13, 113, 213, 313 shielding part
14, 114, 214, 314 detection port
15, 115, 215, 315 groove
21 display part
31 operation part
100, 200, 300, 400 mobile object measurement equipment
100a, 200a 300a, 400a main body
100battachment part

## Claims

1. A wind detection apparatus (1, 101, 201, 301) comprising:
a wind introducing part (10, 110, 210, 310) including:
a flow passage (11, 111, 211, 311) configured to allow air to flow through; and
a shielding part (13, 113, 213, 313) configured to shield part of the flow passage in the circumferential direction with respect to a length direction of the flow passage, and;
a sound measuring device (12, 112, 212, 312) configured to measure sound, the sound measuring device being spatially connected to the flow passage.

2. The wind detection apparatus (1, 101, 201, 301) according to claim 1, wherein a blocking part (117) is provided in the flow passage (11, 111, 211, 311) to block the air flowing through the flow passage (11, 111, 211, 311) in the length direction of the flow passage (11, 111, 211, 311).
